Europäisches Patentamt

European Patent Office

Office européen des brevets

(19)

(11) Veröffentlichungsnummer : **0 070 465**
**B1**

(12)

# EUROPÄISCHE PATENTSCHRIFT

(45) Veröffentlichungstag der Patentschrift :
30.10.85

(51) Int. Cl.⁴ : **H 04 N   5/14, H 04 N   5/44**

(21) Anmeldenummer : **82106115.7**

(22) Anmeldetag : **08.07.82**

(54) **Verfahren und Anordnung zum Erhöhen der Bildwiedergabefrequenz.**

(30) Priorität : **21.07.81 DE 3128727**

(43) Veröffentlichungstag der Anmeldung :
**26.01.83 Patentblatt 83/04**

(45) Bekanntmachung des Hinweises auf die Patenterteilung : **30.10.85 Patentblatt 85/44**

(84) Benannte Vertragsstaaten :
**BE DE FR GB IT NL SE**

(56) Entgegenhaltungen :
DE-A- 2 444 069
DE-A- 2 713 823

(73) Patentinhaber : **International   Standard   Electric Corporation**
**320 Park Avenue**
**New York 10022 (US)**
**BE FR GB IT NL SE**
**Standard Elektrik Lorenz Aktiengesellschaft**
**Hellmuth-Hirth-Strasse 42**
**D-7000 Stuttgart 40 (DE)**
**DE**

(72) Erfinder : **Reiber, Hans**
**Holzhauserstrasse 32**
**D-7000 Stuttgart 80 (DE)**
Erfinder : **Wörz, Klaus Walter**
**Theodor-Veiel-Strasse 38**
**D-7000 Stuttgart 50 (DE)**

(74) Vertreter : **Pohl, Heribert, Dipl.-Ing et al**
**Standard Elektrik Lorenz AG Patent- und Lizenzwesen Kurze Strasse 8 Postfach 300 929**
**D-7000 Stuttgart 30 (DE)**

## Beschreibung

Die Erfindung betrifft ein Verfahren zum Erhöhen der Bildwiedergabefrequenz, insbesondere bei einem Fernsehempfänger, bei dem das mit gegebener Bild- und Zeilenfrequenz empfangene Videosignal abgetastet, durch digitale Datensätze dargestellt, mit einer ersten, der Einschreibfrequenz, in einen Speicher eingeschrieben, mit einer zweiten, der Auslesefrequenz, welche ein ganzzahliges Vielfaches der Einschreibfrequenz darstellt, aus dem Speicher ausgelesen, analogisiert und mit höherer Bild- und Zeilenfrequenz als Vollbild ohne Zeilensprung auf dem Bildschirm dargestellt wird, um ein flimmerfreies Bild zu erhalten und eine Anordnung, insbesondere einen Fernsehempfänger, zur Durchführung dieses Verfahrens.

Es ist, z. B. aus der DE-OS 29 15 359, bekannt, daß sowohl durch Erhöhen der Bildwiedergabefrequenz, als auch durch Verzicht auf den Zeilensprung ein flimmerfreies Bild erreicht werden kann. Beides kann man erreichen, wenn man das empfangene Bild in digitaler Form speichert und mit anderer Geschwindigkeit oder in anderer Reihenfolge wieder ausliest. Auch zum Anpassen eines von einer fremden Quelle, z. B. einem Video-Recorder, stammenden Videosignals an die von einer Sendeanstalt verwendete Norm wird in dem Artikel von E. Zuch : « Put video a/d converters to work », veröffentlicht auf den Seiten 68-73 der Zeitschrift « Electronic design », 16. Jg., vom 2. Aug. 1978, eine digitale Zwischenspeicherung vorgeschlagen. In all diesem Fällen muß einerseits laufend in den Speicher eingeschrieben werden, andererseits muß aber auch laufend aus diesem Speicher ausgelesen werden. Diese Problematik kann etwa dadurch umgangen werden, daß mehrere Speicher verwendet werden, wobei in einen Speicher eingeschrieben und aus einem anderen Speicher gleichzeitig ausgelesen werden kann. Dies ist z. B. in der DE-OS 29 15 359 der Fall, wo für jede einzelne Bildzeile ein getrennter Speicher verwendet wird. In dem o. g. Artikel scheint dieses Problem überhaupt nicht erkannt zu sein. Ein- und Auslesen wird hier nicht koordiniert und ist zum Teil auch nicht koordinierbar. In dem Artikel von J.D. Millward : « Neue Entwicklungen für die Anwendung digitaler Techniken bei der Filmabtastung », erschienen in « Rundfunktechnische Mitteilungen », 1980, H. 3, S. 101-104, insbesondere Seite 103, Spalte 2, Zeilen 2-5 und 15-22, ist festgestellt, daß es für eine ähnliche Anordnung möglich ist, die erforderlichen Ein- und Auslesevorgänge zeitlich ineinander zu schachteln, wobei jedoch nur etwas über das zeitliche Mittel ausgesagt ist. Vor und nach der Speicherung erfolgt hierbei eine Serien-Parallel- bzw. Parallel-Serien-Wandlung. Die dazu erforderlichen Wandler werden gleichzeitig als Zwischenspeicher verwendet und sie sind in diesem Fall als solche auch unbedingt erforderlich. Eine andere weitverbreitete Möglichkeit, um quasi gleichzeitig in einen Speicher einzuschreiben und aus ihm auszulesen, erhält man, wenn man vor und hinter dem Speicher jeweils zwei parallele Pufferspeicher anordnet. Zwischen den parallel geschalteten Pufferspeichern wird dann immer derart umgeschaltet, daß der eine den kontinuierlichen Datenfluß von oder nach außen übernimmt, während der andere in rascher Folge seinen Inhalt in den Speicher überträgt bzw. aus diesem übernimmt.

Der Erfindung liegt die Aufgabe zugrunde, mit nur einem einzigen Vollbildspeicher auszukommen. Die Lösung soll so geschaffen sein, daß sie auch ohne Serien-Parallel-bzw. Parallel-Serien-Wandler realisiert werden kann, wenn ausreichend schnelle Speicher hierfür verwendet werden. Damit wird nicht nur eine einfachere Ansteuerung erreicht, es wird vielmehr gleichzeitig auch die Anzahl der Anschlüsse des Speichers drastisch reduziert.

Gelöst wird die Aufgabe dadurch, daß man Ein- und Auslesezyklen derart ineinander schachtelt, daß die Zeit zwischen dem Auftreten eines ersten einzuschreibenden Datensatzes und dem Auftreten des folgenden einzuschreibenden Datensatzes derart aufgeteilt wird, daß in dieser Zeit zunächst ein Datensatz eingeschrieben wird, worauf dann k Datensätze ausgelesen werden, bevor der nächste Datensatz eingeschrieben wird und daß zur Darstellung ohne Zeilensprung die Speicheradressierung beim Einschreiben und Auslesen passend aufeinander abgestimmt wird.

Um von einer Übertragung mit Zeilensprung auf eine Wiedergabe ohne Zeilensprung überzugehen, wird der Speicher so organisiert, daß beim Auslesen die einzelnen Speicheradressen fortlaufend durchgezählt werden können. Beim Einschreiben muß hierzu innerhalb einer Bildzeile fortlaufend durchgezählt werden, während beim Übergang von einer empfangenen Bildzeile zur nächsten ein Adressenbereich übersprungen wird, der dem der dazwischen liegenden Bildzeile des anderen Halbbildes entspricht. Beim Einschreiben des ersten Halbbilds muß die Speicheradressierung bei Null beginnen und beim Einschreiben des zweiten Halbbilds so, daß in die vom ersten Halbbild nicht genutzten Speicherplätze eingeschrieben wird.

Man kann, um langsamere Speicher verwenden zu können, vor dem Einschreiben in den Speicher jeweils m seriell aufeinanderfolgende Datenwörter in einem Serien-Parallel-Wandler zusammenfassen und als einen Datensatz parallel in den Speicher einschreiben und die dann wieder parallel aus dem Speicher ausgelesenen Datensätze vor dem Analogisieren in einen Parallel-Serien-Wandler in m seriell aufeinanderfolgende Datenwörter zurückwandeln.

Läßt man die Auslesezyklen einander in gleichem zeitlichem Abstand folgen und schiebt dabei nach jeweils k Auslesezyklen einen Einschreibzyklus zwischen zwei Auslesezyklen ein, so ist prinzipiell keine Pufferung der Daten erforderlich. Man kann jetzt sogar, wenn dadurch die Ansteuerung einfacher wird, auch schon mit dreifacher Frequenz einschreiben. Dies bedeutet nur, daß jedes Datenwort dreimal in denselben Speicherbereich eingeschrieben wird.

Hat man jedoch aus anderen Gründen ohnehin Pufferspeicher, so kann man diese dazu mitverwenden, die Einschreib- und Auslesezyklen in einen festen Takt einzupassen, indem man jeweils k Auslesezyklen mit gleichem Abstand aufeinander folgen läßt, zum nächsten Auslesezyklus einen doppelt so langen Abstand hält und in diesen größeren Abstand den Einschreibzyklus legt.

Bei einem zur Farbwiedergabe geeigneten Gerät trennt man das Videosignal vor der Abtastung in ein Leuchtdichte-Signal und zwei Farbdifferenz-Signale auf, verarbeitet jedes dieser drei Teilsignale so, wie dies bisher für das Gesamtsignal beschrieben wurde und bildet vor der Darstellung auf dem Bildschirm aus Leuchtdichte-Signal und Farbdifferenz-Signalen in bekannter Weise die Rot-, Grün- und Blausignale.

Geringe Unterschiede in der Verarbeitung dieser drei Teilsignale ergeben sich durch die geringere Bandbreite der beiden Farbdifferenz-Signale. Man wählt deshalb die Abtastfrequenz für das Leuchtdichte-Signal um den Faktor n größer als für die beiden Farbdifferenz-Signale, wobei der Faktor n zweckmäßigerweise eine Potenz von 2 ist ($n = 2^i$), vorzugsweise n = 4. Faßt man durch Serien-Parallel-Wandler mehrere Datensignale zusammen, so wählt man zweckmäßig unterschiedliche Faktoren m und $m' = m/n$. Benützt man keine Serien-Parallel-Wandler, so benötigt man für die Farbdifferenz-Signale eine um den Faktor n geringere Anzahl von Speicheradressen als beim Leuchtdichte-Signal. Die niedrigstwertigen i Adressleitungen werden dann für die Speicher der Farbdifferenz-Signale nicht gebraucht.

Eine andere Möglichkeit zur Verarbeitung auch der Farbanteile, bei der nur ein Analog-Digital- und nur ein Digital-Analog-Wandler benötigt wird, ergibt sich dadurch, daß man das Videosignal erst auf der Ausgangsseite des Speichers, also bei der k-fachen Frequenz, über Farbartsignal und Farbträger in Leuchtdichte- und Farbdifferenz-Signale auftrennt. Dazu muß die Abtastung mit einer so hohen Frequenz erfolgen, daß auch die Farbanteile noch vollständig mit enthalten sind.

Bei Verfahren mit Farbfehlerkorrektur entspricht die hierbei erforderliche Verzögerung des Farbartsignals dem 2/k-fachen der Dauer einer empfangenen Zeile.

Man könnte den zur Gewinnung der Farbdifferenzsignale erforderlichen Farbträger als k-faches eines in bekannter Weise gebildeten Farbträgers erhalten. Seine Phase müßte dann, abhängig von der Laufzeit des übrigen Signals durch den Speicher verändert werden. Dasselbe wird erreicht, wenn der Farbträger auch aus dem dem Speicher entnommenen Signal gebildet wird, wozu zumindest der Teil des Zeilenrücklaufs mitgespeichert wird, der den Burst enthält.

Um die vom Auge noch wahrnehmbare Frequenz von 60 ... 70 Hz zu überschreiten, wird die Zeilenfrequenz bei der Wiedergabe auf das Dreifache gegenüber der bei der Übertragung erhöht (k = 3). Bei 25 übertragenen Bildern pro Sekunde (50 Halbbilder pro Sekunde) entspricht dies einer Bildwiedergabefrequenz von 75 Hz.

Ein Fernsehgerät, Bildschirmtelefon oder dgl., das nach diesem Verfahren arbeitet, ist so aufgebaut, daß die Steuer- und Adressleitungen aller Speicher und Speicherteile parallel geschaltet sind, so daß letztlich nach außen nur ein einziger Speicher mit mehreren parallelen Ein- und Ausgängen in Erscheinung tritt. Die Ansteuerung dieses Speichers ist damit auf recht einfache Art möglich.

Der zur Erzielung der Flimmerfreiheit erforderliche Speicher kann gleichzeitig dazu mitverwendet werden, eine Möglichkeit zur Standbilddarstellung zu erzielen. Hierzu muß im einfachsten Fall durch einen Schalter das Einschreibsignal für den oder die Speicher unterbrochen werden, damit das zuletzt eingeschriebene Bild als Standbild erhalten bleibt.

Im folgenden wird die Erfindung anhand von Ausführungsbeispielen unter Zuhilfenahme der beiliegenden Zeichnungen weiter erläutert.

Figur 1 zeigt als Ausführungsbeispiel das Blockschaltbild eines Farbfernsehempfängers zur Durchführung des erfindungsgemäßen Verfahrens.

Figur 2 zeigt als Ausführungsbeispiel das Blockschaltbild des Datenwegs für das Leuchtdichte-Signal.

Figur 3 zeigt ein Ausführungsbeispiel für den Parallel-Serien-Wandler 7 nach Fig. 2.

Figur 4 zeigt ein Beispiel für den zeitlichen Ablauf des Einschreibens und Auslesens der in Bildspeicher 6 nach Fig. 2 gespeicherten Daten.

Figur 5 zeigt ein weiteres Beispiel ähnlich Fig. 4.

Figur 6 zeigt als Ausführungsbeispiel das Blockschaltbild für die Steuereinheit 2.

Figur 7 zeigt beispielhaft verschiedene Signalverläufe.

Figur 8 zeigt als Ausführungsbeispiel das Blockschaltbild des Datenwegs für eines der beiden Farbdifferenz-Signale.

Figur 9 zeigt ein weiteres Ausführungsbeispiel ähnlich Fig. 1.

Figur 10 zeigt für das Ausführungsbeispiel nach Fig. 9 eine Möglichkeit zur Bildung von Leuchtdichte-Signal und Farbdifferenz-Signalen.

Figur 11 zeigt schematisch, am Beispiel eines aus 11 Zeilen bestehenden Bildes, das Wechseln der Phase des Farbträgers beim Empfang und bei der Wiedergabe des Bildes.

Die Numerierung der Baugruppen, Funktionsteile und Signalverläufe wurde weitgehend in Anlehnung an das Dezimalsystem durchgeführt, wobei jedoch die Dezimalpunkte weggelassen wurden. Bei Analogien sind apostrophierte Bezeichnungen eingeführt. In den verschiedenen Figuren sind auch gleiche Bauteile mit gleichen Bezugszeichen versehen. Leitungen und die auf ihnen übertragenen Signale tragen dabei das gleiche Bezugszeichen.

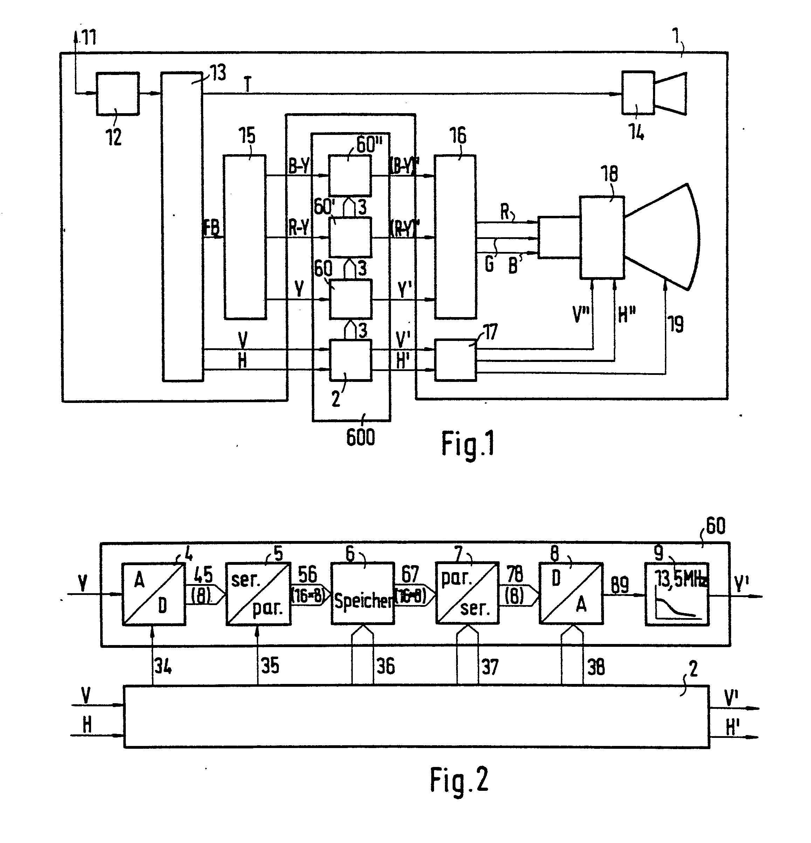

Fig. 1 zeigt als Ausführungsbeispiel das Blockschaltbild eines Farbfernsehempfängers zur Durchführung des erfindungsgemäßen Verfahrens. Der Übersichtlichkeit wegen wurde dies so weit vereinfacht, wie es zum Verständnis der Erfindung erforderlich ist. Es ist leicht einzusehen, daß sich dieses Verfahren ebensogut für ein Schwarz/Weiß-Fernsehgerät, wie auch für Bildtelefone, Monitore oder dgl. eignet.

Läßt man in Fig. 1 die Baugruppe 600 weg, so bleibt ein üblicher Farbfernsehempfänger übrig, dessen Ausführungsmöglichkeiten in allen Einzelheiten bekannt sind.

Der Signalweg ist hierbei der folgende :

Das von einer Signalquelle, etwa von einer Antenne 11 kommende Fernsehsignal wird, gegebenenfalls nach Umsetzung in den videofrequenten Bereich (im Umsetzer 12), in einem Videoteil 13 und einem Farbdekoder 15 in ein Tonsignal T, Vertikal- und Horizontalimpulse V bzw. H, ein Leuchtdichte-Signal Y und die Farbdifferenz-Signale R-Y und B-Y aufgetrennt. In einer Farbmatrix 16 werden aus Leuchtdichte-Signal und Farbdifferenz-Signalen die Farbsignale Rot, Grün und Blau (R, G und B) gebildet, mit denen eine Farbbildröhre 18 gesteuert wird. In einer Ablenkschaltung 17 werden aus den Vertikal- und Horizontal-Impulsen die Vertikal- und Horizontal-Ablenkspannungen (V" und H"), sowie die Hochspannung 19 für die Farbbildröhre 18 gewonnen. Außerdem gibt ein Lautsprecher 14 das Tonsignal T wieder.

Zusätzlich zu den Baugruppen des üblichen Farbfernsehempfängers wird nun zun Verarbeitung der Bild- und Ablenksignale eine Baugruppe 600 eingefügt. Diese weist eine Steuereinheit 2, eine Baugruppe 60 zur Verarbeitung des Leuchtdichte-Signals, Baugruppen 60' und 60" zur Verarbeitung der Farbdifferenzsignale, sowie diese Baugruppen verbindende Steuerleitungen 3 auf. Zum Verständnis der Erfindung wird zunächst nur die Verarbeitung des Leuchtdichte-Signals Y betrachtet.

In Fig. 2 wird der Weg des Leuchtdichte-Signals durch die Baugruppe 600 sowie die dazu gehörige Steuereinheit 2 dargestellt. Um einerseits die Analogie der Verarbeitung des Leuchtdichte-Signals und der Farbdifferenz-Signale und andererseits der verschiedenen Zwischenstufen besser darstellen zu können, werden die Signale an den Ein- und Ausgängen der Zwischenstufen mit unterschiedlichen Zahlen bezeichnet.

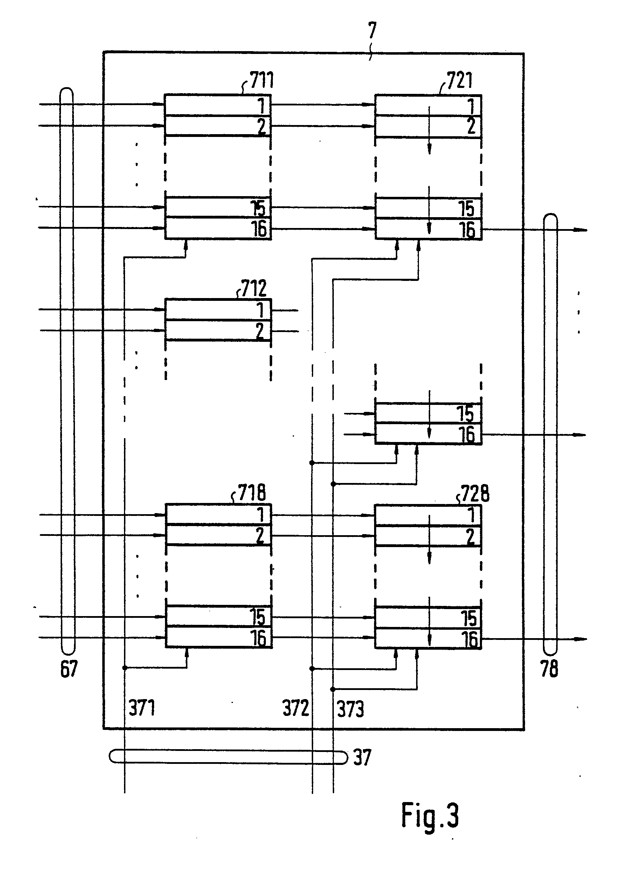

Das Leuchtdichte-Signal Y wird in einem schnellen Analog-Digital-Wandler 4 in ein aus 8 parallelen bits bestehendes Datenwort gewandelt. Diese Datenwörter gelangen in einen Serien-Parallel-Wandler 5, der acht parallele Schieberegister enthält. Diese erlauben, jeweils 16 seriell eintreffende Datenwörter parallel wieder auszugeben. Nach jeweils 16 Takten liegt am Ausgang des Wandlers ein aus 16 × 8 bit bestehender paralleler Datensatz 56 an, der dann von einem nachfolgenden Speicher 6 übernommen wird. Dieser enthält $16 \times 8 \times 2^{14}$ Speicherzellen. Jeweils $16 \times 8$ Speicherzellen sind zu einer Gruppe zusammengefaßt, die unter einer von $2^{14}$ Adressen auswählbar ist und in der wahlweise die enthaltenen Daten abgefragt oder durch neue Daten ersetzt werden können. Der vom Speicher 6 abgefragte $16 \times 8$ bit breite Datensatz kommt als paralleles Datensignal 67 auf einen Parallel-Serien-Wandler 7, der acht parallele Schieberegister 721 ... 728 enthält (Fig. 3). Die je 16 Eingänge sind über Daten-Flip-Flops 711 ... 718 mit den Ausgängen des Speichers verbunden. Jeder Datensatz wird in eine Folge von 16 Datenwörtern rückgewandelt, die je aus 8 parallelen bits bestehen. Dieses Digitalsignal 78 wird einem Digital-Analog-Wandler 8 zugeführt und dort in ein analoges Leuchtdichte-Signal 89 zurückgewandelt. Ein Tiefpaß 9 ergibt wieder eine kontinuierliche Ausgangsspannung Y'.

Die Steuereinheit 2 steht mit den genannten Baugruppen 4 ... 8 des Übertragungswegs über die Steuerleitungen 3, bestehend aus den Gruppen 34 ... 38, in Verbindung.

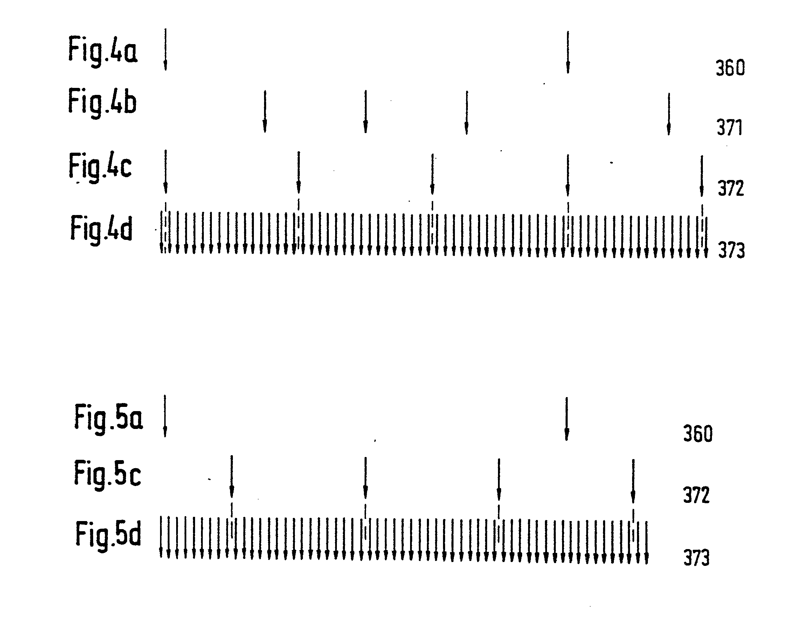

Arbeitet der Analog-Digital-Wandler 4 mit parallel wirkenden Vergleichern so kann eingangsseitig eine Abtast-Halte-Schaltung entfallen und es muß nur ein einziger Übernahmeimpuls 34 pro Bildpunkt gegeben werden. Auch der Serien-Parallel-Wandler 5 benötigt nur ein Taktsignal 35, mit dem die Daten in den Schieberegistern bei jedem Bildpunkt um eine Stelle weitergeschoben werden. Nach jeweils 16 Bildpunkten muß der Speicher 6 einen Einschreibimpuls 360 erhalten, damit die Daten von den Schieberegistern übernommen werden. Die zugehörige Adresse muß dazu schon vorher über den Adressbus 36 eingegeben werden. Zwischen zwei Einlesezyklen sind jeweils drei Auslesezyklen, bei denen ebenfalls zunächst die jeweiligen Adressen angelegt werden müssen, bevor die den nachfolgenden Parallel-Serien-Wandlern vorgeschalteten Daten-Flip-Flops diese Daten übernehmen. Die Zustände « Schreiben-Lesen-Lesen-Lesen-Schreiben-... » folgen in dieser Reihenfolge in gleichen Abständen zeitlich aufeinander (Fig. 4a für « Schreiben », Fig. 4b für « Lesen »). Die Übernahme von den Flip-Flops in die Schieberegister erfolgt zeitlich äquidistant (Fig. 4c). Dazwischen erfolgt das Auslesen aus den Schieberegistern (Fig. 4d). Der Wandler 7 benötigt Übernahmeimpulse 371 und 372 für die Flip-Flops bzw. die Schieberegister und Ausleseimpulse 373 für die Schieberegister. Der Taktimpuls 381 für den nachfolgenden D/A-Wandler ist synchron mit dem Taktimpuls 373. Ein Austastimpuls 382 setzt den vom D/A-Wandler abgegebenen Helligkeitswert während des Zeilenrücklaufs auf einen Bezugswert, der für die Wiedergewinnung des Gleichanteils (Klemmung) erforderlich ist.

Die zwischengeschalteten Daten-Flip-Flops 711 ... 718 können entfallen, wenn die Eingänge der Schieberegister 721 ... 728 ausreichend schnell sind und wenn es möglich ist, die Speicher um 50 % schneller zu betreiben. Fig. 5 zeigt das dann erforderliche zeitliche Verhalten, wobei jetzt die im Beispiel nach Fig. 4 gezeigte Zwischenstufe der Übernahme in die Schieberegister (Fig. 4c) entfällt.

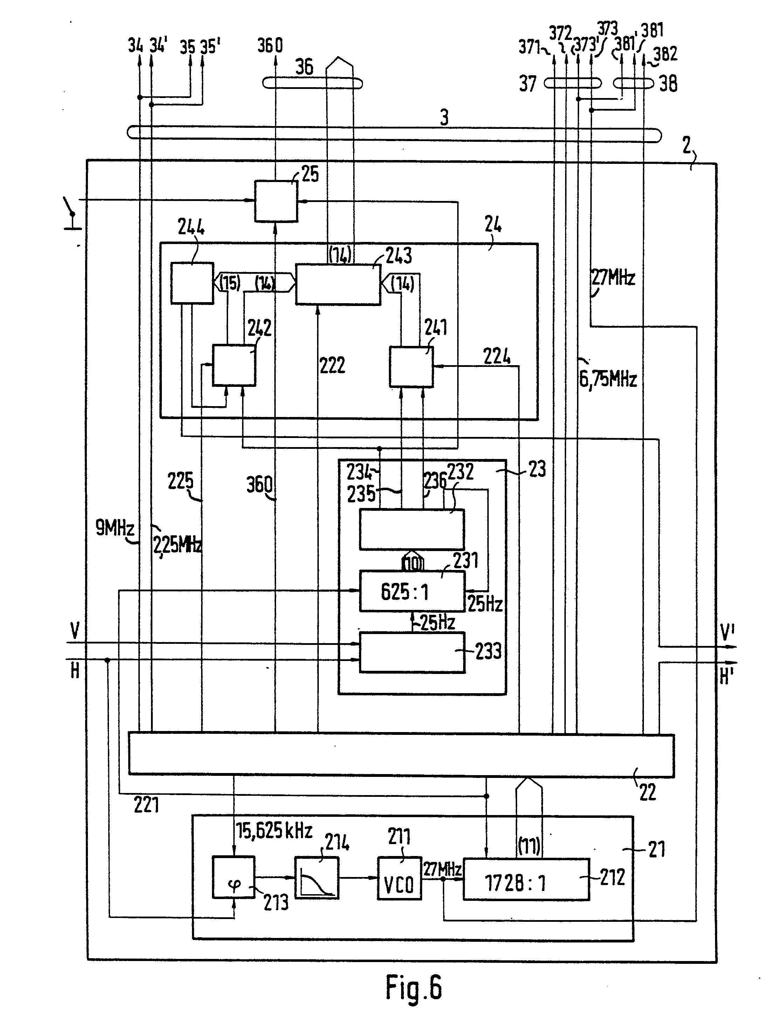

Zur Erzeugung der Steuersignale ist die Steuereinheit 2 aufgeteilt in einen Taktgenerator 21, einen Zeilendecoder 22, einen Vollbilddecoder 23, einen Adressgenerator 24 und eine Standbildschaltung 25 (Fig. 6).

Ein spannungsgesteuerter Oszillator (VCO) 211 erzeugt im Taktgenerator 21 eine Taktfrequenz von 27 MHz, die unmittelbar als Ausleseimpuls 373 für den Parallel-Serien-Wandler 7 und als Taktimpuls 381 für den Digital-Analog-Wandler 8 verwendet wird. Die Taktfrequenz wird im Zähler 212 durch 1728 geteilt und ergibt damit die übliche Zeilenablenkfrequenz von 15,625 kHz. Sie wird in einem Phasenvergleicher 213 mit dem empfangenen Horizontalimpuls H verglichen. Die im Tiefpaß 214 ausgesiebten niederfrequenten Anteile der Ausgangsspannung des Vergleichers 213 werden zur Nachstimmung des VCO's 211 verwendet. Damit wird eine Synchronisation auf das empfangene Signal erreicht.

Der Zeilendecoder 22 erzeugt aus dem Stand des Zählers 212 diejenigen Steuersignale, die für alle (empfangsseitigen) Zeilen gleich sind. Ein Zeilenende-Signal 221 setzt den Zähler 212 beim Zählerstand 1728 auf Null stellt einen Zeilenzähler 231 im Vollbilddecoder 23 weiter. Im Gegensatz zur Sendenorm wird hier erst die erste Bildinhalt tragende Zeile als Bildbeginn und Beginn der Zeilenzählung angenommen.

Kern des Vollbilddecoders 23 ist der Zeilenzähler 231, der die empfangenen Zeilen zählt. Sein Zählerstand wird vom Decoder 232 ausgewertet. Beim Zählerstand 625 wird der Zähler 231 auf Null gesetzt. Der Synchronisation mit dem empfangenen Bild dient eine Vollbildkennung 233. Diese verwendet die Tatsache, daß nur bei jedem zweiten Halbbild die vorderen Flanken des Horizontalimpulses H und des Vertikalimpulses V dichter aufeinander folgen als etwa 16 µs. Dies läßt sich etwa dadurch feststellen, daß man beide Impulse dazu verwendet, je ein Monoflop zu triggern und die Gleichzeitigkeit der Ausgangsimpulse durch ein UND-Gatter feststellt. Auch dieser Ausgangsimpuls wird zum Rücksetzen des Zählers 231 verwendet.

Der Adressgenerator 24 enthält einen Schreibzähler 241, einen Lesezähler 242, einen Umschalter 243 und einen Decoder 244.

Der Schreibzähler 241 bildet die Adressierung für die in den Speicher 6 einzuschreibenden Daten 56. Er wird dazu vom Zeilendecoder 22 nach jedem eingeschriebenen Datensatz durch das Signal 224 um eins weitergezählt. Sind die 28 Datensätze einer Zeile eingeschrieben, so folgen die Datensätze der übernächsten Zeile. Deshalb müssen während des Zeilenrücklaufs 28 weitere Zählimpulse übertragen werden. Am Beginn eines Vollbilds wird der Schreibzähler 241 vom Decoder 232 über das Signal 235 auf Null gesetzt.

Das Taktsignal 224 wirkt sich nicht aus, solange das Rücksetzsignal 235 anliegt, was während des ganzen Bildrücklaufs nach Empfang eines Vollbids der Fall ist. Während des ganzen Bildrücklaufs nach Empfang des ersten Halbbilds liegt ein Setzsignal 236 am Schreibzähler an, setzt diesen auf 28 und verhindert gleichzeitig ein Weiterzählen. Die dann folgende Zeile ist die erste des zweiten Halbbilds, dessen Bildinhalt in die beim vorangehenden Halbbild während der Zeilenrückläufe übersprungenen Speicherzellen eingeschrieben werden muß. Durch die um 28 versetzten Anfangsadressen bei beiden Halbbildern und das Überspringen von je 28 Adressen während des Zeilenrücklaufs ergibt sich eine fortlaufende Zählung entsprechend der räumlichen Anordnung der Bildpunkte.

Der Lesezähler 242 bildet die Adressierung für die aus dem Speicher 6 auszulesenden Daten 67. Diese wurden beim Einschreiben bereits so umgeordnet, daß beim Auslesen ohne Zeilensprung die Daten in der vorliegenden Reihenfolge verwendet werden können. Dazu erhält der Lesezähler 242 ein Taktsignal 225 vom Zeilendecoder 22, derart, daß während der Dauer einer Einlesezeile drei Zeilen ausgelesen werden.

Der Decoder 244 stellt fest, wann alle 576 Zeilen mit je 28 Datensätzen ausgelesen sind (Zählerstand 16128). Er gibt dann einen Vertikalablenkimpuls V' ab, der solange andauert, bis der Bildrücklauf beendet ist, was beim Zählerstand 17 500 (= 625 × 28) der Fall ist. Bei diesem Zählerstand wird der Zähler 242 rückgesetzt. Durch einen weiteren sehr schmalen Rücksetzimpuls 234 vom Vollbilddecoder 23 wird das ausgelesene Bild mit dem eingeschriebenen synchronisiert.

Durch die Art des Einschreibens und Auslesens wird sichergestellt, daß jeder Bildpunkt mit einer gegenüber der Übertragung dreifachen Frequenz dargestellt wird. Bei 25 übertragenen Bildern pro Sekunde ergibt sich damit eine Bildwiedergabefrequenz von 75 Hz. Die vom Auge noch wahrnehmbare Frequenz von 60 ... 70 Hz ist damit überschritten.

Der Umschalter 243 ist erforderlich, weil zwischen den Zählerständen der beiden Zähler 241 und 242 umgeschaltet werden muß. Das vom Zeilendecoder 22 kommende Signal 222 bewirkt diese Umschaltung.

Ein Einschreibimpuls 360 wird gegeben, wenn der Datensatz 56 in die gerade ausgewählten Speicherzellen eingeschrieben werden soll.

Weitere vom Zeilendecoder 22 erzeugte Signale :

— Ein 9 MHz-Signal wird als Übernahmeimpuls 34 für den Analog-Digital-Wandler 4 und als Taktsignal 35 für den Serien-Parallel-Wandler 5 verwendet.

— Ein 2,25 MHz-Signal ergibt die Signale 34' und 35' für den noch zu beschreibenden Farbübertragungsweg.

— Die Übernahmeimpulse 371 und 372 für die Flip-Flops bzw. Schieberegister des Parallel-Serien-Wandlers 17.

— Ein 6,75 MHz-Signal ergibt die den oben beschriebenen Signalen 373 und 381 entsprechenden Signale 373' und 381' für den Farbübertragungsweg.

— Die Horizontalimpulse H' = 3 × H für die Wiedergabe.

In der Standbildschaltung 25 kann der Einschreibimpuls 360 unterbrochen werden. Wenn kein neues Bild eingeschreiben wird, wird das noch im Speicher befindliche Bild wiedergegeben. Durch geeignete Verknüpfung mit dem Vollbildimpuls 234 kann zusätzlich erreicht werden, daß die Unterbrechung der Einschreibimpulse 360 nicht mitten im Bild erfolgt. Mit einer derartigen Standbildschaltung ist z. B. ein problemloses Abphotographieren vom Bildschirm möglich.

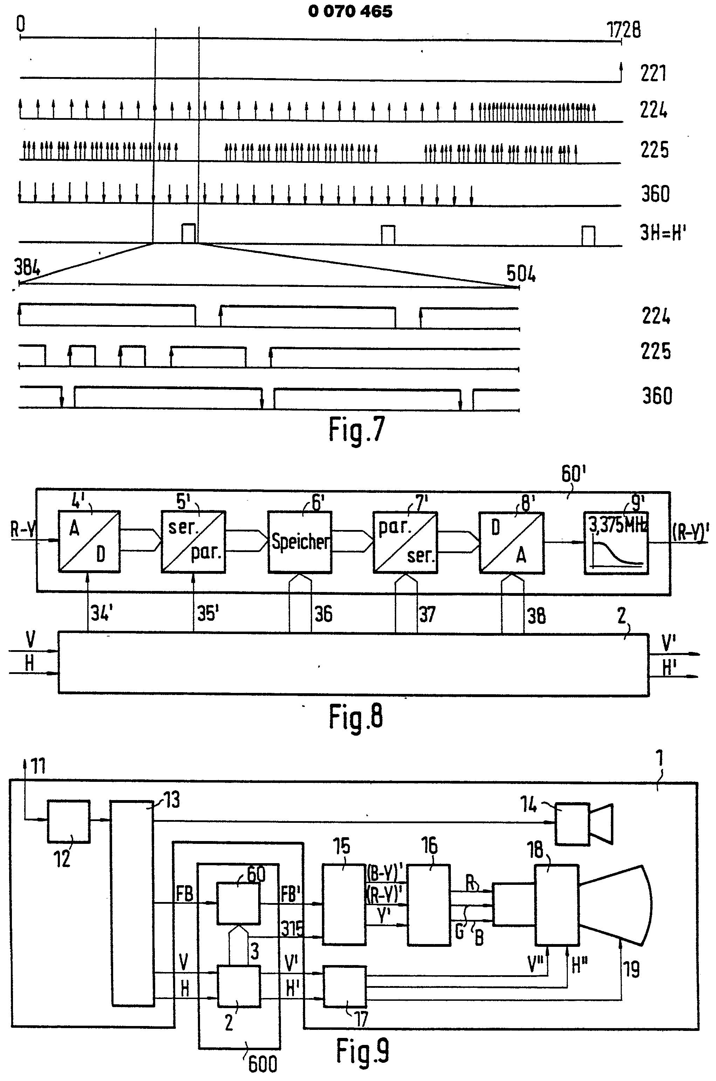

In Fig. 7 ist die zeitliche Aufeinanderfolge wichtiger Signalverläufe dargestellt.

Das vorstehend beschriebene Verfahren kann für sich schon zur Verarbeitung eines Schwarz/Weiß-Signals verwendet werden. Zur Wiedergabe auch der Farbinformation kommen noch zwei weitere Kanäle für die Farbdifferenzsignale hinzu.

Die Farbdifferenzsignale R-Y und B-Y werden untereinander gleich und in starker Anlehnung an das Leuchtdichte-Signal Y (vgl. Fig. 2) behandelt. In Fig. 8 ist nur einer dieser beiden Signalwege dargestellt. Der eingangsseitige Analog-Digital-Wandler 4' besitzt eine Auflösung von nur 6 bit entsprechend einer Auflösung in $2^6 = 64$ Helligkeitsstufen. Wegen der geringeren erforderlichen Bandbreite ist die Frequenz des Abtastsignals 34' gegenüber der des entsprechenden Signals 34 auf ein Viertel reduziert. Im anschließenden Serien-Parallel-Wandler 5' wird ebenfalls mit der niedrigeren Frequenz 35' = 34' getaktet, so daß an dessen Ausgang ein 4 × 6 bit breiter Datensatz 56' ansteht, der in den Speicher 6' übernommen werden muß. Dieser enthält $4 × 6 × 2^{14}$ Speicherzellen. Er stimmt damit in der Adresstiefe mit dem Speicher 6 für das Leuchtdichte-Signal überein, nur seine Datenbreite, d. h. die Anzahl der zueinander parallelen Datenwege, ist geringer. Damit kan die Ansteuerung aller drei Speicher 6 und 6' und 6", insbesondere deren Adressierung, gemeinsam erfolgen. Auch die nachfolgende Rückwandlung in das Analogsignal (R-Y)' erfolgt ganz entsprechend wie beim Leuchtdichte-Signal. Auch hier wird ein zusätzliches Taktsignal 373' = 381' benötigt, mit einem Viertel der Frequenz des entsprechenden Signals 373 = 381. Die Steuereinheit 2 kann so mit zwei zusätzlichen, leicht zu erzeugenden Signalen auch zur Steuerung der Farbwege mit benutzt werden.

Bei Verwendung sehr schneller Speicher, bei denen die Serien-Parallel- und die Parallel-Serien-Wandlung entfallen, werden die zwei niedrigstwertigen Adressbits des Leuchtdichtekanals nicht für die Farbdifferenzkanäle verwendet. Auch dann bleibt die Steuerung für Leuchtdichte- und Farbdifferenzsignale gleich.

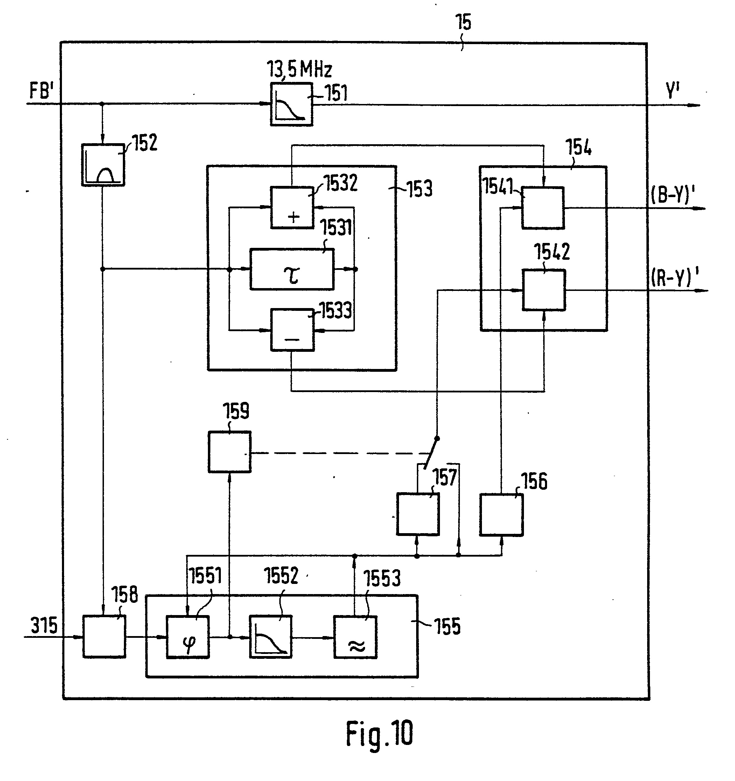

Eine weitere Möglichkeit zur Verarbeitung auch des Farbsignals wird anhand der Fig. 9-11 beschrieben. Fig. 9 unterscheidet sich von Fig. 1 zum einen dadurch, daß die Baugruppen 60' und 60" sowie die zugehörigen Datenwege fehlen und zum andern dadurch, daß der Farbdecoder 15 erst auf der Ausgangsseite der Baugruppe 600 liegt. Das gespeicherte Signal enthält hier den vollen Farb- und Bildanteil (FB-Signal).

Fig. 10 zeigt ein Ausführungsbeispiel für einen PAL-Farbdecoder 15. Das Leuchtdichtesignal wird aus dem dem Speicher entnommenen FB'-Signal durch Filterung in einem Tiefpaß 151 gewonnen. Das Farbartsignal wird vom Bandpaß 152 ausgefiltert, der die k-fache Bandbreite und Mittenfrequenz gegenüber den üblichen hierfür verwendeten Bandpässen aufweist.

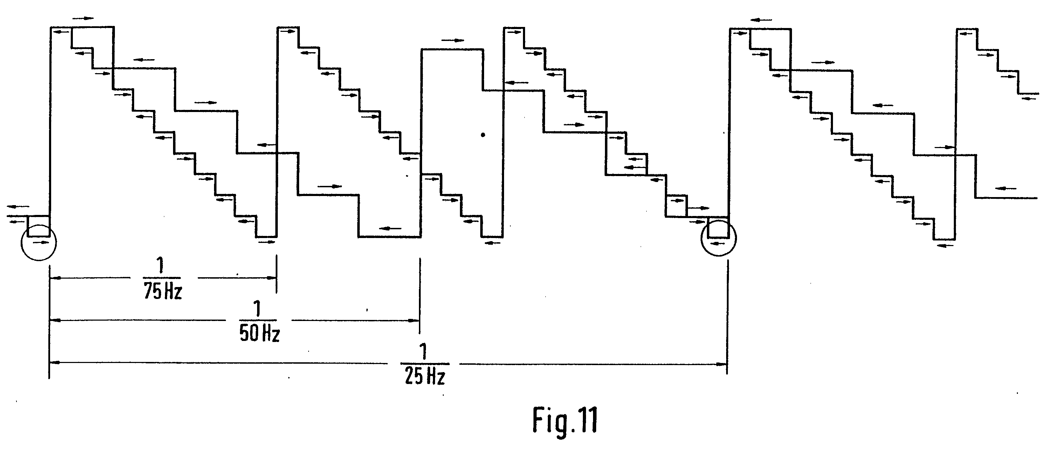

Sowohl die höhere Frequenz als auch die Wiedergabe ohne Zeilensprung erfordern Änderungen in der Art der Decodierung gegenüber Decodierern für normgemäße Wiedergabe. Fig. 11 zeigt schematisch, am Beispiel eines aus 11 Zeilen bestehenden Bildes, das Wechseln der Phase des Farbträgers beim Empfang und bei der Wiedergabe des Bildes. Wechselt beim Empfang die Phasenlage jeweils von einer Zeile zur nächsten, so wechselt bei der Wiedergabe die Phasenlage nur bei jeder zweiten Zeile. Nach jeweils 3 wiedergegebenen Vollbildern wird diese regelmäßige Folge gestört (Kreis in Fig. 11). Derartige Unregelmäßigkeiten treten nicht nur für den hier dargestellten Fall mit k = 3 auf. Fallen die Bildwechsel des empfangenen Vollbilds nicht, wie hier dargestellt, mit Vollbildwechseln des wiedergegebenen Bildes zusammen, so können diese Unregelmäßigkeiten auch für k = 3 im sichtbaren Bereich erscheinen.

Aus dieser Darstellung folgen verschiedene Forderungen :

— Die Vollbildwechsel des empfangenen Bildes müssen mit Vollbildwechseln des wiedergegebenen Bildes zusammenfallen. Dies ist schon berücksichtigt.

— Die zur Farbfehlerkorrektur erforderliche Verzögerung des Farbartsignals muß der 2/k-fachen Dauer einer empfangenen Zeile entsprechen.

— Die Bildung des Farbträgers und die daraus abgeleitete Schaltphase für die Farbfehlerkorrektur muß möglichst sicher erfolgen.

Die letzte Forderung kann dadurch erfüllt werden, daß der Farbträger aus dem dem Speicher entnommenen Signal gebildet wird, wozu zumindest der Teil des Zeilenrücklaufs mitgespeichert wird, der den Burst enthält. Dieser wird durch den Schalter 158 aus dem Farbartsignal ausgeblendet. Dazu muß die Steuereinheit 2 ein zusätzliches Schaltsignal 315 liefern.

Das so ausgeblendete Signal wird in einer Phasenregelschaltung 155 einem Phasenvergleicher 1551 zugeführt und mit der Phase des Farbhilfsträgeroszillators 1554 verglichen. Das Vergleichssignal wirkt zum einen über einen Tiefpaß 1552 auf den Farbhilfsträgeroszillator 1553 zurück und steuert zum andern die 0°/180°-Umschaltung des Farbhilfsträgers. Anstelle des üblichen PAL-Flip-Flops enthält die Steuerung 159 einen Bandpaß mit nachfolgendem Schwellwertschalter.

Das im Laufzeitdemodulator 153 enthaltene Laufzeitglied 1531 benötigt eine Laufzeit von 64 μs × 2/3. Aus verzögertem und unverzögertem Signal wird im Addierer 1532 die Summe und im Subtrahierer 1533 die Differenz gebildet. Summen- und Differenzsignal werden im Demodulator 154 zwei Synchrondemodulatoren 1541 und 1542 zugeführt und dort mit dem um 90° gedrehten bzw. zwischen 0° und 180° geschalteten Farbhilfsträger gemischt, um so die Farbdifferenzsignale (B-Y)' und (R-Y)' zu erhalten. Die Phasendrehung geschieht in den Phasenschiebern 156 und 157, die 0°/180°-Umschaltung wird von der Steuerung 159 gesteuert.

Wegen des nun mitzuspeichernden Bursts genügt es nicht mehr, 52 μs von 64 μs einer Zeile zu speichern, es müssen etwa 57 μs gespeichert werden. Außerdem muß, um die Farbanteile mitzuspeichern, mit höherer Frequenz abgetastet werden. Speicher für die Farbdifferenzsignale werden jedoch nicht benötigt. Auch entfallen die schnellen Analog-Digital- und Digital-Analog-Wandler der beiden zusätzlichen Datenkanäle. Ein weiterer Vorteil dieser Lösung liegt auch darin, daß durch die erst auf der Wiedergabeseite erfolgende Farbfehlerkorrektur die Phasenfehler, insbesondere verursacht von den erforderlichen Filtern, mit korrigiert werden.

Um auch hier mit $2^{14}$ Adressen auszukommen, werden jeweils 24 Datenwörter zu einem Datensatz zusammengefaßt. Bei Abtastung mit 11,25 MHz, was einer Bandbreite von 5,625 MHz entspricht, können damit knapp 607 Zeilen mit je 24 × 27 Abtastwerten gespeichert werden. Damit ist auch sichergestellt, daß noch ausreichend viele Zeilen des Bildrücklaufs zur regelmäßig erforderlichen Synchronisation herangezogen werden können.

**Patentansprüche**

1. Verfahren zum Erhöhen der Bildwiedergabefrequenz, insbesondere bei einem Fernsehempfänger, bei dem das mit gegebener Bild- und Zeilenfrequenz empfangene Videosignal abgetastet, durch digitale Datensätze dargestellt, mit einer ersten, der Einschreibfrequenz, in einen Speicher (6, 6', 6'') eingeschrieben, mit einer zweiten, der Auslesefrequenz, welche ein ganzzahliges Vielfaches (Faktor k) der Einschreibfrequenz darstellt, aus dem Speicher (6, 6', 6'') ausgelesen, analogisiert und mit höherer Bild- und Zeilenfrequenz als Vollbild ohne Zeilensprung auf dem Bildschirm dargestellt wird, um ein flimmerfreies Bild zu erhalten, dadurch gekennzeichnet, daß die Zeit zwischen dem Auftreten eines ersten einzuschreibenden Datensatzes und dem Auftreten des folgenden einzuschreibenden Datensatzes derart aufgeteilt wird, daß in dieser Zeit zunächst ein Datensatz eingeschrieben wird, worauf dann k Datensätze ausgelesen werden, bevor der nächste Datensatz eingeschrieben wird und daß zur Darstellung ohne Zeilensprung die Speicheradressierung beim Einschreiben und Auslesen passend aufeinander abgestimmt wird.

2. Verfahren nach Anspruch 1, dadurch gekennzeichnet, daß der Speicher (6, 6', 6'') so organisiert ist, daß beim Auslesen die einzelnen Speicheradressen fortlaufend durchgezählt werden können, wozu beim Einschreiben innerhalb einer Bildzeile fortlaufend durchgezählt wird, während beim Übergang von einer empfangenen Bildzeile zur nächsten ein Adressenbereich übersprungen wird, der dem der dazwischen liegenden Bildzeile des anderen Halbbilds entspricht, und beim Einschreiben des ersten Halbbilds die Speicheradressierung bei Null, beim Einschreiben des zweiten Halbbilds dagegen so beginnt, daß in die vom ersten Halbbild nicht genutzten Speicherplätze eingeschrieben wird.

3. Verfahren nach einem der Ansprüche 1 oder 2, dadurch gekennzeichnet, daß, etwa um auch solche Speicher verwenden zu können, die für die gewählte Abtastfrequenz zu langsam sind, jeweils m seriell aufeinanderfolgende Datenwörter in einem Serien-Parallel-Wandler (5, 5', 5'') zusammengefaßt und als ein Datensatz parallel in den Speicher (6, 6', 6'') eingeschrieben werden und die dann wieder parallel aus dem Speicher (6, 6', 6'') ausgelesenen Datensätze vor dem Analogisieren in einem Parallel-Serien-Wandler (7, 7', 7'') in m seriell aufeinanderfolgende Datenwörter rückgewandelt werden.

4. Verfahren nach einem der Ansprüche 1 bis 3, dadurch gekennzeichnet, daß alle Auslesezyklen einander in gleichem zeitlichem Abstand folgen und dabei nach jeweils k Auslesezyklen ein Einschreibzyklus zwischen zwei Auslesezyklen eingeschoben wird.

5. Verfahren nach Anspruch 3, dadurch gekennzeichnet, daß jeweils k Auslesezyklen mit gleichem Abstand aufeinanderfolgen, zum nächsten Auslesezyklus ein doppelt so langer Abstand folgt, innerhalb dessen ein Einschreibzyklus erfolgt und im Parallel-Serien-Wandler (7, 7', 7'') wieder ein kontinuierlicher Datenstrom entsteht.

6. Verfahren nach einem der Ansprüche 1 bis 5, dadurch gekennzeichnet, daß das Videosignal in ein Leuchtdichtesignal und zwei Farbdifferenzsignale aufgetrennt wird und vor der Darstellung auf dem Bildschirm aus Leuchtdichtesignal und Farbdifferenzsignalen die Rot-, Grün- und Blausignale gebildet werden.

7. Verfahren nach Anspruch 6, dadurch gekennzeichnet, daß die Auftrennung des Videosignals in Leuchtdichtesignal und Farbdifferenzsignale vor der Abtastung erfolgt, so daß drei in gleicher Weise parallel zu verarbeitende Datensätze entstehen, wobei jedoch die Abtastfrequenz für das Leuchtdichtesignal um den Faktor n größer ist als für die beiden Farbdifferenzsignale, wo der Faktor n eine Potenz von 2 ist ($n = 2^i$), vorzugsweise n = 4 und in etwaigen Serien-Parallel- und Parallel-Serien-Wandlern für Leuchtdichtesignal und Farbdifferenzsignale unterschiedliche Faktoren m und m' = m/n gelten oder bei den Farbdifferenzsignalen die Anzahl der Speicheradressen um den Faktor n geringer ist als beim Leuchtdichtesignal, wobei dann die niedrigstwertigen i Adressleitungen für die Farbdifferenzsignale nicht gebraucht werden.

8. Verfahren nach Anspruch 6, dadurch gekennzeichnet, daß das Videosignal mit einer auch die Farbanteile enthaltenden Bandbreite nach einem der Ansprüche 1 bis 5 verarbeitet wird und die Farbanteile erst auf der Ausgangsseite des Speichers (6), also bei der k-fachen Frequenz aus Farbartsignal und Farbträger gebildet werden, wobei bei Verfahren mit Farbfehlerkorrektur die hierbei erforderliche Verzögerung des Farbartsignals dem 2/k-fachen der Dauer einer empfangenen Zeile entspricht und eine etwaige 0°/180°-Umschaltung jeweils nach zwei wiedergegebenen Zeilen erfolgt.

9. Verfahren nach Anspruch 8, dadurch gekennzeichnet, daß der für die Gewinnung der Farbdifferenzsignale erforderliche Farbträger auch aus dem dem Speicher (6) entnommenen Signal gebildet wird, wozu zumindest der Teil des Zeilenrücklaufs mitgespeichert wird, der den Burst enthält.

10. Verfahren nach Anspruch 9, dadurch gekennzeichnet, daß die Vollbildwechsel des empfangenen Bildes mit Vollbildwechseln des wiedergegebenen Bildes zusammenfallen.

11. Verfahren nach einem der Ansprüche 1 bis 10, dadurch gekennzeichnet, daß um die vom Auge noch wahrnehmbare Frequenz von 60 ... 70 Hz zu überschreiten, die Zeilenfrequenz bei der Wiedergabe auf das Dreifache der bei der Übertragung erhöht wird (k = 3), was bei 25 übertragenen Ganzbildern pro Sekunde einer Ganzbildwiedergabefrequenz von 75 Hz entspricht.

12. Anordnung zur Durchführung des Verfahrens zum Erhöhen der Bildwiedergabefrequenz, insbesondere für Fernsehempfänger, nach einem der Ansprüche 1 bis 11, bestehend aus einem Empfangsteil (12, 13) zum Bilden den Ton-, des Video- und des Austast- und Synchronsignals, einem Tonwiedergabeteil (14), gegebenenfalls einer Baugruppe (15) zum Auftrennen des Videosignals in Leuchtdichte- und Farbdifferenzsignale, einer oder drei Abtastschaltungen, einem oder drei Analog/Digital-Wandlern (4, 4', 4''), gegebenenfalls einem oder drei Serien-Parallel-Wandlern (5, 5', 5''), einem oder drei Speichern (6, 6', 6''), gegebenenfalls einem oder drei Parallel-Serien-Wandlern (7, 7', 7''), einem oder drei Digital/Analog-Wandlern (8, 8', 8''), einem oder drei Tiefpässen (9, 9', 9''), gegebenenfalls einer Farbmatrix (16), einer Schwarzweiß- oder Farbbildwiedergaberöhre (18), einer Steuereinheit (2) und einem Ablenkteil (17), dadurch gekennzeichnet, daß die Steuer- und Adressleitungen aller Speicher (6, 6', 6'') und Speicherteile parallel geschaltet werden, so daß eine einfache Ansteuerung möglich ist.

13. Anordnung nach Anspruch 12, dadurch gekennzeichnet, daß durch einen Schalter (25) das Einschreibsignal (360) für den oder die Speicher unterbrochen werden kann, damit das zuletzt eingeschriebene Bild als Standbild erhalten bleibt.

## Claims

1. Method of increasing the picture-reproducing frequency, particularly in a television receiver, wherein the video signal received at a given field and horizontal frequency is sampled, represented by digital data units, written into a memory (6, 6', 6'') at a first frequency, the write frequency, read out of the memory (6, 6', 6'') at a second frequency, the read frequency, which is an integral multiple (factor k) of the write frequency, returned to analog form, and reproduced on the screen as a non-interlaced frame at a higher field and horizontal frequency to obtain a flicker-free picture, characterized in that the time between the occurrence of a first data unit to be written into the memory and the occurrence of the next data unit to be written into the memory is so divided that during this time one data unit is first written in, after which k data units are read out before the next data unit is written in, and that for the purpose of presentation without line interlacing the memory addressing upon writing in and that upon reading out are appropriately co-ordinated with each other.

2. A method as claimed in Claim 1, characterized in that the memory (6, 6', 6'') is organized so that during readout the individual memory adresses can be serially counted, this being accomplished by serially counting within a scanning line during write-in, while during the transition from one received scanning line to the next, one address range corresponding to that of the intermediate scanning line of the other field is skipped, and that, when the first field is written in, the memory addressing starts at zero, whereas, when the second field is written in, the memory addressing starts so that information is written into the memory locations not used by the first field.

3. A method as claimed in Claim 1 or 2, characterized in that, for instance in order to permit use of memories which are too slow for the sampling frequency chosen, every m serial data words are combined in a serial-parallel converter (5, 5', 5'') and written into the memory (6, 6', 6'') in parallel as one data unit, which data units are then read out of the memory (6, 6', 6'') in parallel and, before being returned to analog form, converted back to m serial data words in a parallel-serial converter (7, 7', 7'').

4. A method as claimed in any one of Claims 1 to 3, characterized in that all read cycles follow each other at equal time intervals, with a write cycle inserted between two read cycles after every k read cycles.

5. A method as claimed in Claim 3, characterized in that every k read cycles follow each other at equal intervals, that the next read cycle follows after an interval which is twice as long and within which a write cycle takes place and a continuous data stream is formed again in the parallel-serial converter (7, 7', 7").

6. A method as claimed in any one of Claims 1 to 5, characterized in that the video signal is separated into a luminance signal and two colour-difference signals, and that prior to presentation on the screen the red, green, and blue signals are derived from the luminance signal and the colour-difference signals.

7. A method as claimed in Claim 6, characterized in that the separation of the video signal into luminance signal and colour-difference signals takes place prior to sampling so that three data units are formed which must be processed in parallel in the same manner, with the sampling frequency for the luminance signal exceeding that for the two colour-difference signals by a factor of n, where n is a power of 2 ($n = 2^i$), preferably $n = 4$, and with different factors, m and $m' = m/n'$ being used in any serial-parallel and parallel-serial converters for the luminance signal and the colour-difference signals, or the number of memory addresses for the colour-difference signals being smaller than that for the luminance signal by a factor of n, in which case the least significant i address lines are not needed for the colour-difference signals.

8. A method as claimed in Claim 6, characterized in that the video signal is processed as claimed in any one of Claims 1 to 5 with a bandwidth including the colour components, and that the colour components are formed from the chrominance signal and the colour subcarrier only at the output end of the memory (6), i. e., at k times the write frequency, the chrominance signal delay necessary in methods with hue error correction being equal to 2/k times the duration of one received line, and any 0/180° switching taking place after every two reproduced lines.

9. A method as claimed in Claim 8, characterized in that the chrominance subcarrier required to derive the colour-difference signals is also formed from the signal taken from the memory (6), for which purpose at least that part of the horizontal retrace line is stored which contains the colour burst.

10. A method as claimed in Claim 9, characterized in that the frame changes of the received picture coincide with frame changes of the reproduced picture.

11. A method as claimed in any one of Claims 1 to 10, characterized in that, in order to exceed the frequency of 60 ... 70 Hz which still produces a visual sensation, the horizontal frequency during reproduction is increased to three times that during transmission ($k = 3$), so that 25 frames transmitted per second will be reproduced at a frequency of 75 Hz.

12. Arrangement for implementing the method of increasing the picture-reproducing frequency, particularly for television receivers, as claimed in any one of Claims 1 to 11, comprising a receiving section (12, 13) for forming the sound signal, the video signal and the blanking and synchronizing signals, a sound-reproducing section (14), a unit (15), if necessary, for separating the video signal into luminance and colour-difference signals, one or three sampling circuits, one or three analog-to-digital converters (4, 4', 4"), one or three serial-parallel converters (5, 5', 5") if necessary, one or three memories (6, 6', 6"), one or three parallel-serial converters (7, 7', 7") if necessary, one or three digital-to-analog converters (8, 8', 8"), one or three low-pass filters (9, 9', 9"), a colour matrix (16) if necessary, a monochrome or colour picture tube (18), a control unit (2) and a deflecting section (17), characterized in that the control and address lines of all memories (6, 6', 6") and parts thereof are connected in parallel so as to permit simple memory control.

13. An arrangement as claimed in Claim 12, characterized in that the write signal (360) for the memory or memories can be interrupted by a switch (25) so that the frame written into the memory last is presented on the screen as a still picture.

Figur 2    Speicher = memory
Figur 7    Speicher = memory

## Revendications

1. Procédé de changement de la fréquence de restitution de l'image, en particulier dans un récepteur de télévision, dans lequel le signal vidéo reçu avec des fréquences données d'image et de ligne est échantillonné, représenté par des blocs de données numériques, écrit dans une mémoire (6, 6', 6") avec une première fréquence, la fréquence d'écriture, lu dans la mémoire (6, 6', 6") avec une seconde fréquence, la fréquence de lecture, qui est un multiple entier (d'un facteur k) de la fréquence d'écriture, converti sous forme analogique et représenté sur l'écran avec des fréquences plus élevées d'image et de ligne sous la forme d'une image entière sans entrelacement de ligne, afin d'obtenir une image sans scintillation, caractérisé en ce que le temps entre l'arrivée d'un premier bloc de données à écrire et l'arrivée du bloc suivant de données à écrire est subdivisé de telle manière que, sur cette période, on écrit d'abord un bloc de données, puis on lit k blocs de données avant que le bloc de données suivant soit écrit et en ce que, pour la restitution sans entrelacement, l'adressage en mémoire est adapté entre l'écriture et la lecture.

2. Procédé selon la revendication 1, caractérisé en ce que la mémoire (6, 6', 6") est organisée de telle manière que, lors de la lecture, les différentes adresses de mémoire peuvent être comptées successivement, ce qui est obtenu en ce qu'on compte successivement pendant une ligne lors de l'écriture, puis on saute, pendant le passage d'une ligne reçue à la suivante, une zone d'adresses correspondant à la ligne d'image de la seconde demi-image à intercaler et en ce qu'on commence à l'adresse de mémoire zéro pour l'écriture de la première demi-image et, par contre, pour l'écriture de la seconde demi-image on utilise les places de mémoire inutilisées par la première demi-image.

3. Procédé selon la revendication 1 ou 2, caractérisé en ce que, pour pouvoir également utiliser des mémoires qui sont trop lentes pour la fréquence d'échantillonnage choisie, m mots de données se suivant en série sont regroupés dans un convertisseur série-parallèle (5, 5', 5") et sont écrits en parallèle sous la forme d'un bloc de données dans la mémoire (6, 6', 6") et en ce que les blocs de données lus en parallèle dans la mémoire (6, 6', 6"), avant leur conversion sous forme analogique, sont reconvertis dans un convertisseur parallèle-série (7, 7', 7") en m mots de données se succédant en série.

4. Procédé selon l'une des revendications 1 à 3, caractérisé en ce que tous les cycles de lecture se succèdent à intervalles réguliers et en ce que, après k cycles de lecture, un cycle d'écriture est inséré entre deux cycles d'écriture.

5. Procédé selon la revendication 3, caractérisé en ce que des trains de k cycles de lecture se suivent à intervalle régulier, avec un intervalle double jusqu'au cycle de lecture suivant, pendant lequel se produit un cycle d'écriture et en ce que l'on obtient à nouveau un flux de données continu dans le convertisseur parallèle-série (7, 7', 7").

6. Procédé selon l'une des revendications 1 à 5, caractérisé en ce que le signal vidéo est subdivisé en un signal de luminance et deux signaux de différences de couleurs et en ce que, avant la restitution sur l'écran, les signaux rouge, vert et bleu sont formés à partir du signal de luminance et des signaux de différences de couleurs.

7. Procédé selon la revendication 6, caractérisé en ce que la séparation du signal vidéo en signal de luminance et en signaux de différences de couleurs se produit avant l'échantillonnage, si bien que l'on obtient trois ensembles de données à traiter parallèlement de manière similaire, la fréquence d'échantillonnage du signal de luminance étant toutefois supérieure d'un facteur n à celle des deux signaux de différences de couleurs, ce facteur n étant une puissance de 2 ($n = 2^i$), de préférence n = 4, et en ce que, dans les éventuels convertisseurs série-parallèle et parallèle-série pour le signal de luminance et les signaux de différences de couleurs, on utilise des facteurs différents m et m' = m/n ou bien que, pour les signaux de différences de couleurs, le nombre des adresses de mémoire est réduit d'un facteur n par rapport à celles pour le signal de luminance, les i lignes d'adresses basses n'étant pas utilisées pour les signaux de différences de couleurs.

8. Procédé selon la revendication 6, caractérisé en ce que le signal vidéo avec une largeur de bande telle qu'il contient aussi les composantes de chrominance est traité selon l'une des revendications 1 à 5 et en ce que les signaux de chrominance ne sont formés que du côté sortie de la mémoire (6), également à une fréquence multipliée par k, à partir du signal de chrominance et de la sous-porteuse couleurs, le retard nécessaire du signal de chrominance dans le cas d'un procédé avec correction des aberrations chromatiques étant de 2/k fois la durée d'une ligne reçue et la commutation 0/180° se produisant après deux lignes restituées.

9. Procédé selon la revendication 8, caractérisé en ce que la sous-porteuse couleurs nécessaire pour l'obtention des signaux de différences de couleurs est également formée à partir du signal lu en mémoire (6), au moins une partie du retour de ligne contenant le signal de salve étant elle aussi mémorisée.

10. Procédé selon la revendication 9, caractérisé en ce que les changements d'image entière de l'image reçue coïncident avec les changements d'image entière de l'image restituée.

11. Procédé selon l'une des revendications 1 à 10, caractérisé en ce que, pour dépasser la fréquence de 60 à 70 Hz encore perceptible par l'œil, la fréquence de ligne à la restitution est triplée par rapport à la fréquence de transmission (k = 3), ce qui, pour 25 images entières transmises par seconde, donne une fréquence de restitution d'image de 75 Hz.

12. Dispositif pour la réalisation du procédé de changement de la fréquence de restitution de l'image, en particulier pour récepteurs de télévision, selon l'une des revendications 1 à 11, se composant d'une partie de réception (12, 13) pour la formation du signal son, du signal vidéo et du signal de suppression et de synchronisation, d'une section de reproduction sonore (14), éventuellement d'un module (15) pour la séparation du signal vidéo en un signal de luminance et deux signaux de différences de couleurs, d'un ou trois circuits d'échantillonnage, d'un ou trois convertisseurs analogique-numérique (4, 4', 4"), éventuellement d'un ou trois convertisseurs série-parallèle (5, 5', 5"), d'une ou trois mémoires (6, 6', 6"), éventuellement d'un ou trois convertisseurs parallèle-série (7, 7', 7"), d'un ou trois convertisseurs analogique-numérique (8, 8', 8"), d'un ou trois filtres passe-bas (9, 9', 9"), éventuellement d'une matrice couleurs (16), d'un tube de restitution noir et blanc ou couleurs (18), d'une unité de commande (2) et d'une section de balayage (17), caractérisé en ce que les lignes de commande et d'adressage de toutes les mémoires et parties de mémoire sont montées en parallèle, si bien que l'on peut avoir une commande simple.

13. Dispositif selon la revendication 12, caractérisé en ce que, grâce à un commutateur (25), le signal d'écriture (360) dans la ou les mémoires peut être interrompu, afin que la dernière image écrite soit conservée sous la forme d'un arrêt sur image.

Fig.1

Fig.2

Fig.3

Fig.4a

360

Fig.4b

371

Fig.4c

372

Fig.4d

373

Fig.5a

360

Fig.5c

372

Fig.5d

373

0 070 465

Fig.6

4

**0 070 465**

Fig.7

Fig.8

Fig.9

5

Fig.10

Fig.11